# EUROPÄISCHE PATENTSCHRIFT

(11) **EP 2 571 685 B1**
(45) Veröffentlichungstag und Bekanntmachung des Hinweises auf die Patenterteilung: **19.11.2014**
(21) Anmeldenummer: 12702954.4
(22) Anmeldetag: 03.01.2012
(51) Int. Cl.: B32B 17/10, B65H 11/00, B65H 18/00, B65H 19/00, B65H 29/24, B32B 38/18, B32B 38/00

(54) **VERFAHREN UND VORRICHTUNG ZUM HANDHABEN VON FOLIEN-ZUSCHNITTEN**
METHOD AND APPARATUS FOR HANDLING SHEET BLANKS
PROCÉDÉ ET DISPOSITIF DE MANIPULATION DE DÉCOUPES DE FEUILLES

(30) Priorität: 21.02.2011 AT 2262011
(43) Veröffentlichungstag der Anmeldung: 27.03.2013
(73) Patentinhaber: LISEC Austria GmbH, 3353 Seitenstetten (AT)
(72) Erfinder: MADER, Leopold, A-3364 Neuhofen/Ybbs (AT)
(74) Vertreter: Beer & Partner Patentanwälte KG
(86) Internationale Anmeldenummer: PCT/AT2012/000001
(87) Internationale Veröffentlichungsnummer: WO 2012/112999

(56) Entgegenhaltungen:
- EP-A1- 0 172 143
- EP-A1- 1 564 168
- EP-A2- 0 387 632
- DE-A1- 1 927 936
- DE-U1-202010 008 015

## Beschreibung

Bislang wurden größere Formate solcher Folien auf Schneidetischen, die ähnlich ausgebildet sind wie Glasschneidetische, zerteilt, um die gewünschten Folien-Zuschnitte zu erhalten. Das Abheben der Folien-Zuschnitte vom Schneidetisch erfolgte mit Hilfe von Saugerplatten.

Das Abnehmen der Folien-Zuschnitte mit Hilfe von Saugerplatten und das Auflegen der Folien-Zuschnitte auf Glasscheiben ist problematisch, da ein völlig gleichmäßiges und faltenfreies Abheben ebenso schwer erreichbar ist wie das gleichmäßige und faltenfreie Auflegen der Folien-Zuschnitte auf Glasscheiben.

Aus der EP 1 564 168 A ist ein Wickeldorn bekannt, der mit Hilfe eines Nadelgreifers biegeschlaffe, längliche Teile, wie Gewebe, Gewirke oder Folien und Schäume, von einer Anlage, auf der solche Teile übereinander liegen, aufnimmt und zu einem Ballen wickelt.

Der Erfindung liegt die Aufgabe zugrunde, ein Verfahren und eine Vorrichtung der eingangs genannten Gattung zur Verfügung zu stellen, die das Abnehmen und Auflegen von Folien-Zuschnitten mit geringerem Aufwand, jedoch genauer und ohne Fehler erlauben.

Gelöst wird diese Aufgabe erfindungsgemäß mit einem Verfahren, das die Merkmale von Anspruch 1 aufweist.

Insoweit die erfindungsgemäße Vorrichtung betroffen ist, wird die der Erfindung zu Grunde liegende Aufgabe mit den Merkmalen des unabhängigen Vorrichtungsanspruches gelöst.

Bevorzugte und vorteilhafte Ausgestaltungen des erfindungsgemäßen Verfahrens und der erfindungsgemäßen Vorrichtung sind Gegenstand der Unteransprüche.

Da bei dem erfindungsgemäßen Verfahren und mit der erfindungsgemäßen Vorrichtung die Folien-Zuschnitte durch Aufwickeln auf eine (Abnahme-)Rolle (Walze oder Trommel) vom Schneidetisch abgenommen (abgehoben) werden, ergeben sich keine Probleme und ein gleichmäßiges und faltenfreies Abnehmen wird erreicht. Auch das Auflegen der Folien-Zuschnitte auf die Fläche einer Glasscheibe im Zuge des Herstellens von Verbundglas, kann durch Abrollen von der Rolle ohne weiteres und faltenfrei erfolgen.

Dabei ist im Rahmen der Erfindung in einer bevorzugten Ausführungsform vorgesehen, dass die wirksame Breite der Rolle, die vorzugsweise eine Breite hat, die der gesamten Breite des Folienschneidetisches entspricht, auf ein Maß eingestellt wird, die der Breite des abzunehmenden/aufzulegenden Folien-Zuschnittes entspricht.

Das Befestigen des einen Randes des Folien-Zuschnittes an der Rolle zum Abnehmen des Folien-Zuschnittes vom Schneidetisch erfolgt im Rahmen der Erfindung, indem der mit der Abnahme-Rolle zu verbindende Rand des Folien-Zuschnittes an der Rolle durch Unterdruck festgelegt wird.

Hierzu kann in der Umfangswand (im Mantel) der (hohlen) Rolle eine Reihe von mit Unterdruck beaufschlagbaren Öffnungen vorgesehen sein. Diese Reihe von Öffnungen erstreckt sich insbesondere parallel zur Achse der Rolle.

Die Erfindung sieht auch vor, dass im Inneren der Rolle Schieber oder ähnliches vorgesehen sind, der nur die Öffnungen für das Beschlagen mit Unterdruck freigibt, die der Breite des aufzunehmenden Folien-Zuschnittes in dem zu erfassenden und zuerst an der Abnahme-Rolle festzulegenden Bereich des Folien-Zuschnittes entsprechen.

Weitere Einzelheiten und Merkmale der Erfindung ergeben sich aus der nachstehenden Beschreibung bevorzugter Ausführungsbeispiele an Hand der Zeichnungen. Es zeigt:
Fig. 1 schematisch einen Folienschneidetisch und
Fig. 2 weitgehend schematisiert eine Abnahme-Rolle.

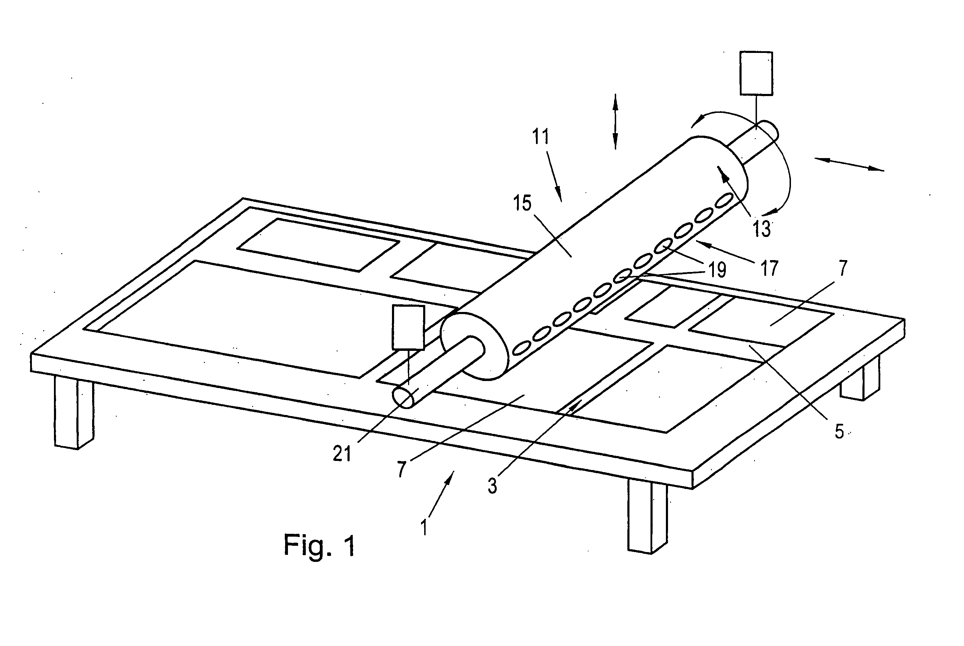

Aus Fig. 1 ist ersichtlich, dass eine, auf einem Folienschneidetisch 1 aufgelegte Folie 3 unter Verbleiben von Abfall 5 nach einem, beispielswiese mit Hilfe eines Rechenprogrammes optimierten Aufteilungsschema in Folien-Zuschnitte 7 zerteilt worden ist. Hierzu wurde die Folie auf den Folienschneidetisch 1 aufgelegt und von einem Werkzeug (nicht gezeigt) zerteilt.

Um Folien-Zuschnitte 7 vom Folienschneidetisch 1 abzunehmen, ist eine Vorrichtung 11 vorgesehen, die eine Abnahme-Rolle 13 aufweist, die eine Breite hat, die der Breite des Folienschneidetisches 1 im wesentlichen entspricht.

Die Abnahme-Rolle 13 wird an einem Rand (Randbereich) eines abzunehmenden Folien-Zuschnittes 7 in Stellung gebracht, indem sie parallel zur Tischfläche verstellt und senkrecht zur Tischfläche abgesenkt wird. Sobald dies geschehen ist, wird die Abnahme-Rolle 13 mit dem unterhalb der Abnahme-Rolle 13 liegenden (Quer-)Rand des Folien-Zuschnittes 7, der vom Folien-Schneidetisch 1 abzunehmen ist, verbunden.

Hierzu ist im gezeigten Ausführungsbeispiel im Mantel 15 der Abnahme-Rolle 13 eine achsparallele Reihe 17 von Öffnungen 19 vorgesehen, die mit Unterdruck beaufschlagt werden können. Der Innenraum der hohlen Abnahme-Rolle 13 kann beispielsweise über seine hohl ausgebildete Welle 21 an eine Unterdruckquelle angeschlossen werden.

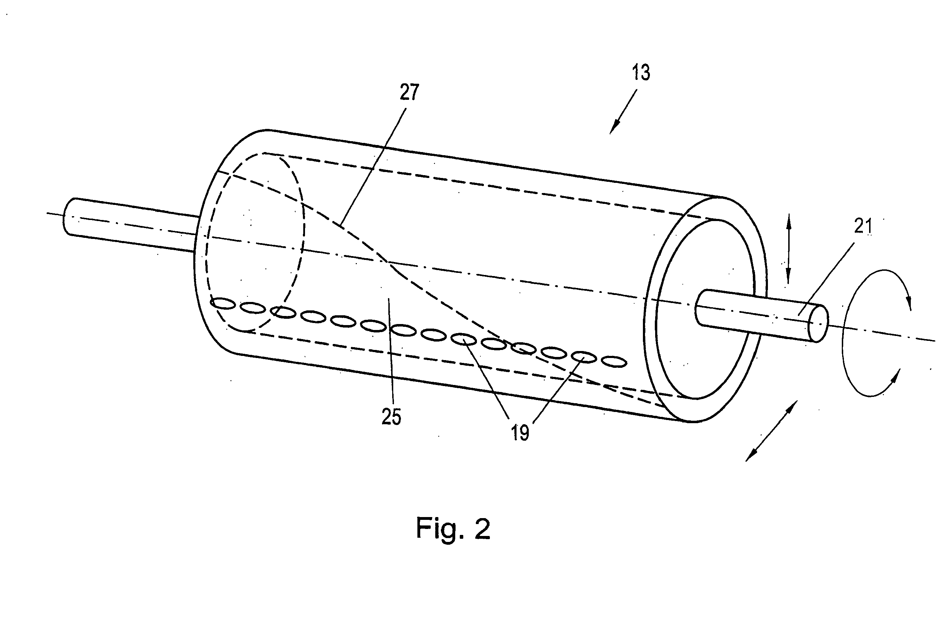

Um die wirksame Breite der Abnahme-Rolle 13, also die Länge des Bereiches der Reihe 17 von Öffnungen 19, der mit Unterdruck beaufschlagt wird, an die Breite des abzunehmenden Folien-Zuschnittes 7 anzupassen, ist bei dem in Fig. 2 gezeigten Ausführungsbeispiel im Inneren der Abnahme-Rolle 13 ein Schieber 25 vorgesehen, der an der Innenfläche des Mantels 15 der Abnahme-Rolle 13 gleitend anliegt und gegenüber dem Mantel 15 (durch einen nicht gezeigten Antrieb) durch Drehen verstellbar ist. So kann bestimmt werden, welche der Öffnungen 19 mit Unterdruck beaufschlagt werden und welche der Öffnungen 19 nicht mit Unterdruck beaufschlagt werden. Dies erlaubt es, die wirksame Breite der Abnahme-Rolle 13 an die Breite des Folien-Zuschnittes 7 anzupassen.

Der Schieber 25 kann beispielsweise ein rohrförmiges Schieberelement sein, der eine schräge Kante 27 aufweist, so dass durch Verdrehen des Schiebers 25 relativ zum Mantel 15 der Abnahme-Rolle 13 jeweils nur die erforderliche Anzahl von Öffnungen 19 der Reihe 17 freigegeben und mit Unterdruck beaufschlagt wird.

Mit Vorteil wird beim erfindungsgemäßen Verfahren zum Abnehmen von Folien-Zuschnitten 7 vom Folienschneidetisch 1 so gearbeitet, das die Abnahme-Rolle 13, nachdem sie mit dem Rand des abzunehmenden Folien-Zuschnittes 7 verbunden worden ist, z.B. dieser Rand angesaugt worden ist, vom Folienschneidetisch 1 etwas abgehoben wird, so dass der Folien-Zuschnitt 7 unter Spannung auf die Abnahme-Rolle 13 aufgewickelt wird, indem diese gedreht wird, wobei die Abnahme-Rolle 13 parallel zur Tischfläche des Folienschneidetisches 1 über den abzunehmenden Folien-Zuschnitt 7 bewegt wird.

Alternativ besteht die Möglichkeit, an Stelle einer Abnahme-Rolle 13 mit einstellbarer wirksamer Breite auch einen Satz von verschieden breiten Abnahme-Rollen 13 zur Verfügung zu stellen, die jeweils eine Reihe 17 von mit Unterdruck beaufschlagbaren Öffnungen 19 aufweisen, wobei alle Öffnungen 19 über die gesamte Länge der Abnahme-Rollen 13 mit Unterdruck beaufschlagbar sind.

Wenn mit dem erfindungsgemäßen Verfahren bzw. der erfindungsgemäßen Vorrichtung Folien bzw. Folien-Zuschnitte bearbeitet werden sollen, die bei Raumtemperatur klebrig sind, kann vorgesehen sein, dass der Folienschneidetisch 1 in einem Klimaraum angeordnet oder einfach mit einer Kühlung seiner Auflage(Tisch-)fläche versehen wird, um die Folie 3 auf einer Temperatur zu halten, z.B. abzukühlen, bei der sie nicht mehr klebrig ist.

Bei einer anderen Ausführungsform, um die wirksame Breite der Abnahme-Rolle 13, die eine achsparallele Reihe 17 von mit Unterdruck beaufschlagbaren Öffnungen 19 aufweist, einzustellen, ist im Inneren der Abnahme-Rolle 13 ein Rohr verdrehbar angeordnet, das achsparallele Lochreihen oder Schlitze mit unterschiedlichen Längen aufweist. Durch Verdrehen des inneren Rohres kann jeweils die Lochreihe oder der Schlitz des inneren Rohres mit Öffnungen 19 im Mantel 15 der Abnahme-Rolle 13 fluchtend ausgerichtet werden, deren Länge die Breite des aufzunehmenden Folien-Zuschnittes entspricht, so dass jeweils die Anzahl von Öffnungen 19 im Mantel 15 der Abnahme-Rolle 13 mit der gewünschten Breite mit Unterdruck beaufschlagt wird, also wirksame Breite der Abnahme-Rolle 13 eingestellt wird.

Zusätzlich kann der Verstellantrieb der Abnahme-Rolle 13 dazu eingerichtet sein, die Abnahme-Rolle 13 in Richtung ihrer Achse relativ (quer) zum Folienschneidetisch 1 zu verstellen, um sie dem abzunehmenden Folien-Zuschnitt 7 gegenüberliegend auszurichten.

Zusammenfassend kann ein Ausführungsbeispiel der Erfindung wie folgt beschrieben werden:
Um Zuschnitte 7 von Folien, wie sie zum Herstellen von Verbundglas verwendet werden, von einem Schneidetisch 1 abzunehmen, wird eine oberhalb des Schneidetisches 1 verstellbare Abnahme-Rolle 13 verwendet, auf welche die Folien-Zuschnitte 7 aufgewickelt werden. Um den Anfang des abzunehmenden Folien-Zuschnittes 7 an der Abnahme-Rolle 13 festzulegen, sind im Mantel 15 der Abnahme-Rolle 13 mit Unterdruck beaufschlagbare Öffnungen 19 vorgesehen. Beim Abnehmen eines Folien-Zuschnittes 7 vom Schneidetisch 1 wird die Abnahme-Rolle 13 am Beginn des abzunehmenden Folien-Zuschnittes 7 in Stellung gebracht, der Zuschnitt 7 an der Abnahme-Rolle 13 festgelegt und die Abnahme-Rolle 13 dann unter Drehen um ihre eigene Achse entlang des Schneidetisches 1 bewegt, so dass sich der Folien-Zuschnitt 7 um den Mantel 15 der Abnahme-Rolle 13 aufwickelt. Für das Ablegen des Folien-Zuschnittes 7 auf eine Glasscheibe im Zuge des Herstellens von Verbundglas kann eine sinngemäß umgekehrte Arbeitsweise verwendet werden.

## Patentansprüche

1. Verfahren zum Aufnehmen von Zuschnitten aus Folien, die zum Herstellen von Verbundglas verwendet werden, von einem Schneidetisch, **dadurch gekennzeichnet, dass** wenigstens ein Folien-Zuschnitt durch Aufwickeln auf eine Abnahme-Rolle von der Fläche des Schneidetisches abgenommen wird, und dass ein Rand des Folien-Zuschnittes an der Abnahme-Rolle durch Unterdruck festgehalten wird.

2. Verfahren nach Anspruch 1, **dadurch gekennzeichnet, dass** die Abnahmerolle durch Bewegen senkrecht zur Ebene des Schneidetisches und dann durch Verstellen parallel zur Ebene des Schneidetisches unter Drehen um ihre eigene Achse bewegt wird, um einen Folien-Zuschnitt abzunehmen.

3. Verfahren nach Anspruch 1 oder 2, **dadurch gekennzeichnet, dass** die Abnahme-Rolle am Beginn des Aufnehmens eines Folien-Zuschnittes vom Folienschneidetisch abgehoben wird.

4. Vorrichtung zum Durchführen des Verfahrens nach einem der Ansprüche 1 bis 3 mit einem Schneidetisch (1), **gekennzeichnet durch** eine mit Hilfe einer Bewegungseinrichtung parallel und senkrecht zu der Ebene des Schneidetisches (1) verstellbare Abnahme-Rolle (13), an der Einrichtungen (17, 19) zum Festlegen eines Randes eines Folien-Zuschnittes (7), der zum Herstellen von Verbundglas verwendet wird, vorgesehen sind, wobei die Einrichtung zum Festlegen eines Folien-Zuschnittes (7) mit Unterdruck beaufschlagbare Öffnungen (19) im Mantel (15) der Abnahme-Rolle (13) umfasst.

5. Vorrichtung nach Anspruch 4, **dadurch gekennzeichnet, dass** die Öffnungen (19) in einer zur Achse der Abnahme-Rolle (13) parallelen Reihe (17) angeordnet sind.

6. Vorrichtung nach Anspruch 4 oder 5, **dadurch gekennzeichnet, dass** den Öffnungen (19) Einrichtungen (25) zum Verschließen bzw. Freigeben zugeordnet sind.

7. Vorrichtung nach Anspruch 6, **dadurch gekennzeichnet, dass** die Einrichtung ein im Inneren der Abnahme-Rolle (13) verstellbarer Schieber (25) ist.

8. Vorrichtung nach Anspruch 7, **dadurch gekennzeichnet, dass** der Schieber (25) eine kreiszylindrische Form hat und einen schräg zur Achse verlaufenden Rand (27) aufweist.

9. Vorrichtung nach einem der Ansprüche 4 bis 8, **dadurch gekennzeichnet, dass** der Abnahme-Rolle (13) ein Antrieb zum Drehen der Abnahme-Rolle (13) um ihre Achse zugeordnet ist.

## Claims

1. Method for picking up blanks of films used for manufacturing composite glass, from a cutting table, **characterised in that** at least one film blank is picked up from the surface of the cutting table by winding it onto a take-off roller, and **in that** a rim of the film blank is retained on the take-off roller by under-pressure.

2. Method according to claim 1, **characterised in that** the take-off roller, by moving it vertically to the plane of the cutting table and then by adjusting it parallel to the plane of the cutting table, is moved by rotating it about its own axis in order to pick up a film blank.

3. Method according to claim 1 or 2, **characterised in that** the take-off roller is lifted off the film-cutting table at the start of picking up a film blank.

4. Device for performing the method according to one of claims 1 to 3 with a cutting table (1), **characterised by** a take-off roller (13) adjustable parallel and vertically to the plane of the cutting table (1) with the aid of a movement mechanism, the take-off roller being provided with means (17, 19) for fixing a rim of the film blank (7) used for manufacturing composite glass, wherein the means for fixing a film blank (7) comprises openings (19) subjected to under-pressure in the shell (15) of the take-off roller (13).

5. Device according to claim 4, **characterised in that** the openings (19) are arranged in a row (17) parallel to the axis of the take-off roller (13).

6. Device according to claim 4 or 5, **characterised in that** the openings (19) are associated with means (25) for closing/releasing.

7. Device according to claim 6, **characterised in that** the means is a slide (25) adjustable inside the take-off roller (13).

8. Device according to claim 7, **characterised in that** the slide (25) has a circular cylindrical shape and comprises a rim (27) extending obliquely to the axis.

9. Device according to one of claims 4 to 8, **characterised in that** the take-off roller (13) has associated with it a drive for rotating the take-off roller (13) about its axis.

## Revendications

1. Procédé destiné à prélever sur une table de coupe des coupons de film que l'on utilise pour la fabrication de verre composite, **caractérisé en ce qu'**au moins un coupon de film est retiré de la surface de la table de coupe par enroulement sur un rouleau de réception et **en ce qu'**un bord du coupon de film est maintenu par dépression sur le rouleau de réception.

2. Procédé selon la revendication 1, **caractérisé en ce que** le rouleau de réception est déplacé par déplacement à la perpendiculaire du plan de la table de coupe et ensuite par réglage à la parallèle du plan de la table de coupe, en le faisant tourner autour de son propre axe, pour prélever un coupon de film.

3. Procédé selon la revendication 1 ou 2, **caractérisé en ce qu'**au début du prélèvement d'un coupon de film, le rouleau de réception est soulevé de la table de coupe du film.

4. Dispositif destiné à réaliser le procédé selon l'une quelconque des revendications 1 à 3, avec une table de coupe (1), **caractérisé par** un rouleau de réception (13) réglable à l'aide d'un système de déplacement à la parallèle et à la perpendiculaire du plan de la table de coupe (1) sur lequel sont prévus des systèmes (17, 19) pour fixer un bord d'un coupon de film (7) que l'on utilise pour la fabrication de verre composite, le système destiné à fixer un coupon de film (7) comprenant dans l'enveloppe (15) du rouleau de réception (13) des orifices (19) susceptibles d'être soumis à une dépression.

5. Dispositif selon la revendication 4, **caractérisé en ce que** les orifices (19) sont disposés en une rangée (17) parallèle à l'axe du rouleau de réception (13).

6. Dispositif selon la revendication 4 ou 5, **caractérisé en ce qu'**aux orifices (19) sont associés des systèmes (25) de fermeture ou de libération.

7. Dispositif selon la revendication 6, **caractérisé en ce que** le système est un coulisseau (25) réglable à l'intérieur du rouleau de réception (13).

8. Dispositif selon la revendication 7, **caractérisé en ce que** le coulisseau (25) a une forme de cylindre circulaire et comporte un bord (27) s'étendant en inclinaison par rapport à l'axe.

9. Dispositif selon l'une quelconque des revendications 4 à 8, **caractérisé en ce qu'**au rouleau de réception (13) est associé un entraînement pour la rotation du rouleau de réception (13) autour de son axe.
